# EUROPEAN PATENT SPECIFICATION

(11) **EP 3 700 048 B1**
(45) Date of publication and mention of the grant of the patent: **01.09.2021**
(21) Application number: 20158134.5
(22) Date of filing: 19.02.2020
(51) Int. Cl.: H02J 7/00, B23Q 11/02, B23Q 11/00, B25F 5/00

(54) **ADAPTER AND METHOD FOR MULTIPLE ELECTRIC DEVICES TO ACHIEVE SYNCHRONIZED OPERATIONS**
ADAPTER AND VERFAHREN FÜR MEHRERE ELEKTRISCHE VORRICHTUNGEN ZUR ERZIELUNG SYNCHRONISIERTER OPERATIONEN
ADAPTATEUR UND PROCÉDÉ POUR DE MULTIPLES DISPOSITIFS ÉLECTRIQUES AFIN D'OBTENIR DES OPÉRATIONS SYNCHRONISÉES

(30) Priority: 19.02.2019 HK 19119677
(43) Date of publication of application: 26.08.2020
(73) Proprietor: Techtronic Cordless GP, Anderson, SC 29621 (US)
(72) Inventor: CHAN, Tin Yi, Kwai Chung, Hong Kong (HK); MOK, Kwok Ting, Kwai Chung, Hong Kong (HK)
(74) Representative: BRP Renaud & Partner mbB Rechtsanwälte Patentanwälte Steuerberater

(56) References cited:
- JP-B2- 4 021 625

## Description

### FIELD OF INVENTION

This invention relates to adapters for electric devices, and in particular adapters for connecting to multiple electric devices at the same time.

### BACKGROUND OF INVENTION

Power tool utilizing air flows are widely used nowadays for various applications, and some of the power tools require an external, second device to provide the air flow for the power tool. For example, sanders are used in combination with vacuum devices so that any dust resulted during operation of the sander is suctioned quickly by the vacuum device and stored to avoid disturbance to the user or pollution to the environment. Other types of power tools such as circular saws, jigsaws, planers and electric drills may have similar requirements of dust suctioning.

Typically, the power tool and the vacuum device are both powered by their own power supplies such as battery packs, and the user has to separately actives the vacuum device and the power tool in order to start the normal operation of the power tool. However, the separately controlled power tool and vacuum device apparently requires more intervention of the user and consumes more time to complete. On the other hand, the power tool such as a sander, when connected with a battery, has a significant form factor that often prevents the user from using the power tool in difficult working environment such as narrow spaces.

JP4021625B2 discloses an arrangement corresponding to the construction and functionality in the preamble of the independent claims, in particular implemented as an arrangement including dust catcher and a power tool suitable for use with the dust catcher. The dust catcher is loaded with batteries as a power source, and houses a direct current motor which rotationally drives a blower by using the batteries as a power source. A dust intake communicating with a dust collecting chamber inside a housing is projectingly formed at one side of the housing. A receptacle which connects a power cord for a hammer drill to supply the power source of the batteries is provided in the vicinity of the dust intake.

### SUMMARY OF INVENTION

In the light of the foregoing background, it is an object of the present invention to provide an adapter for electric devices which eliminates or at least alleviates the above technical problems.

One skilled in the art will derive from the following description other objects of the invention. Therefore, the foregoing statements of object are not exhaustive and serve merely to illustrate some of the many objects of the present invention.

The invention is defined by the appended claims. In particular, the invention is directed, in a first aspect covered by claim 1, to a method of controlling two electric devices for synchronized operations. In a second aspect covered by claim 3, the invention is directed to an adapter for connecting two devices for syhchronized operations. Advantageous embodiments are defined by the dependent claims.

There are many advantages to the present invention. Importantly, the power tool system provided by the present invention allows a battery be shared by two or more power tools due to the adapter connected to the two or more power tools and at the same time to the battery. As such, the user does not necessarily have to hold a portable power tool with a batter which may pose difficulties during operations of the power tool in narrow space or which may be too heavy for the user to hold for a long time. Rather, the battery can be located at a second power tool away from the user, for example on the ground, and only a cable is required to connect the second power tool with the portable power tool.

In addition, the proposed method enables an automatic, synchronized operation of two power tools such as a dust collecting tool and a vacuum device. The user no longer has to manually switch both tools on or off, but a single operation of activating / deactivating one device will automatically trigger power supply or stop of supply to another power tool. This is particularly useful for inexperienced users or users who have to move their locations at the intervals of multiple operations.

### BRIEF DESCRIPTION OF FIGURES

The foregoing and further features of the present invention will be apparent from the following description of preferred embodiments which are provided by way of example only in connection with the accompanying figures, of which:
Fig. 1a is a perspective view of an adapter connected with a sander according to a first embodiment of the invention.
Fig. 1b shows the adapter and the sander in Fig. 1a from another angle of view.
Fig. 2 is an illustration of a user on a ladder operating a power tool system according to another embodiment of the invention.
Fig. 3 shows a power tool system according to a third embodiment of the invention.
Fig. 4a shows a flowchart for the starting sequence of a sander and a vacuum device in a power tool system according to another embodiment of the invention.
Fig. 4b shows a flowchart for the stopping sequence of a sander and a vacuum device in a power tool system of Fig. 4a.

In the drawings, like numerals indicate like parts throughout the several embodiments described herein.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "couple" or "connect" refers to electrical coupling or connection either directly or indirectly via one or more electrical means unless otherwise stated.

Terms such as "horizontal", "vertical", "upwards", " downwards", "above", "below" and similar terms as used herein are for the purpose of describing the invention in its normal in-use orientation and are not intended to limit the invention to any particular orientation.

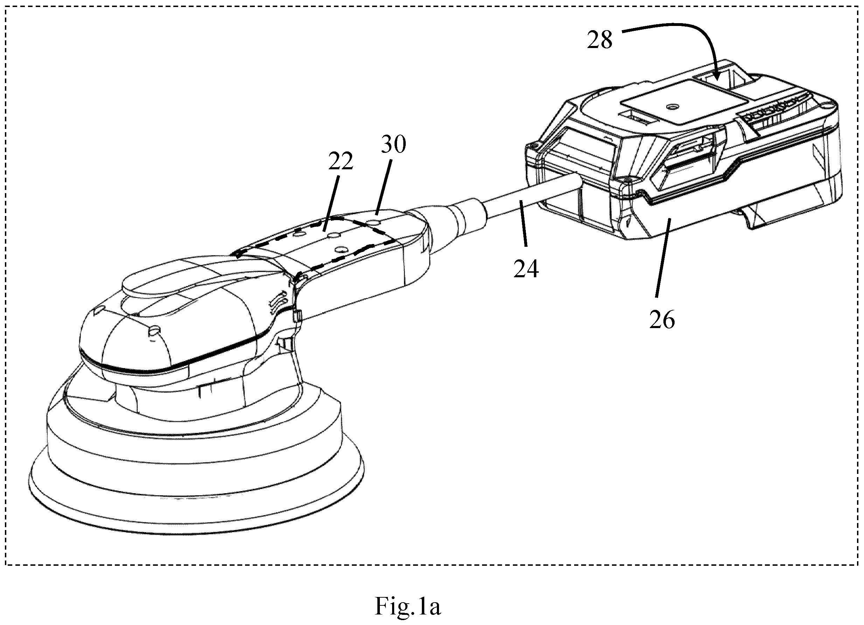

Referring now to Figs. 1a-1b, the first embodiment of the present invention is an adapter for connecting to two independent electric devices and also a battery. The adapter contains a first adapter member **30** connected with a second adapter member **26** by a cable assembly **24**. Note that although the cable assembly **24** shown in Fig. la-lb is relatively short, this is just an abbreviated drawing and the actual length of the cable assembly **24** could be much larger compared to the size of the first adapter member **30** and the second adapter member **26** shown in Figs. 1a-1b. The first adapter member **30** as shown in Figs. 1a-1b is connected with an electric sander **22**, and the sander **22** is a first electric device in this embodiment. The dash lines in Figs. 1a-1b are used as boundaries to show the sander **22** and the first adapter member **30**. The first adapter member **30** contains a first interface (not shown) for connecting to the sander **22.** The first interface has a form factor and electric terminals compatible with a battery receptacle (not shown) of the sander **22**, and in other words the first interface is identical or similar to an interface of a battery that is designed for installing to the sander **22** for proper operation. The cable assembly **24** contains a data cable and a power cable (not shown) so that both electricity and signals (data) can be transmitted between the first adapter member **30** connected with a second adapter member **26**. On the second adapter member **26**, there is a second interface **28** for connecting to a second electric device (not shown in Figs. la-lb) such as a vacuum device. Just like the case of the first interface, the second interface **28** is compatible with a battery receptacle of the second electric device, and is identical or similar to an interface of a battery that is designed for installing to the second electric device for proper operation. There is another battery receptacle **20** located on the second adapter member **26** for connecting a battery (not shown). Note that in this embodiment the battery receptacle **20** and the second interface **28** both existed on the second adapter member **26** are complemental to each other, as they are designed to be mimicking the battery receptacle on the second electric device and the interface on the battery for the second electric device respectively.

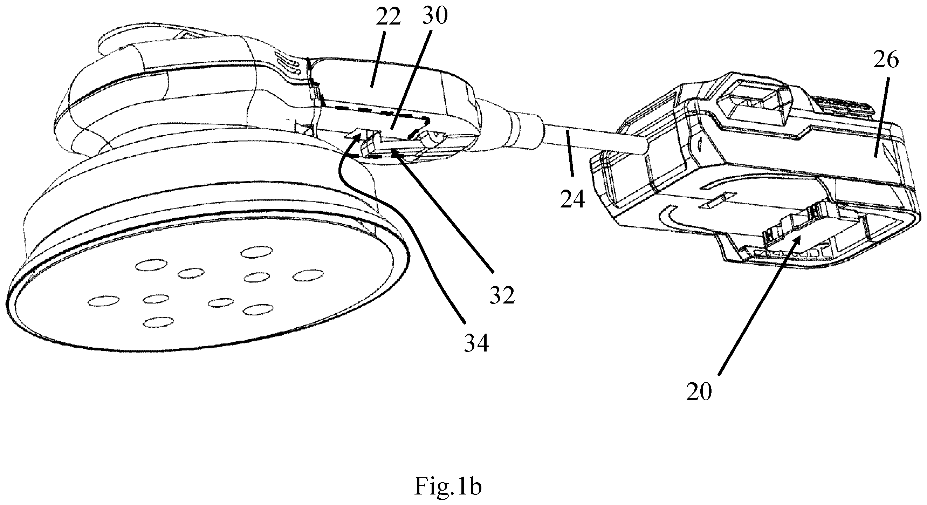

Also, as shown in Fig. 1b, there is a hook **32** configured on the first adapter member **30** which is adapted to engage with a corresponding cut-out **34** on the sander **22**. The hook **32** is spring-loaded and once the first adapter member **30** is properly installed to the sander **22**, the hook **32** will be forced by the spring force to firmly engage with the cut-out **34** to ensure that the first adapter member **30** does not unintentionally disconnect from the sander **22**. The hook **32** is however manipulatable by the user to remove its locking effect so that the first adapter member **30** can be removed from the sander **22**.

Both the first adapter member **30** and the second adapter member **26** contain their respective circuits for example in the form of circuit boards carrying controllers, sensors, and any other components for the synchronized operations of the sander **22** and a vacuum device connected to the second adapter member **26**.

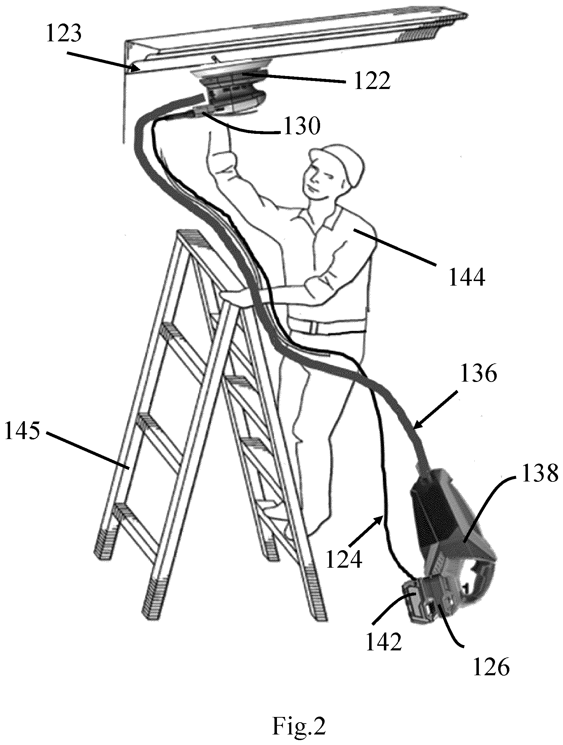

Fig. 2 shows another embodiment where one can see that a user **144** while climbing on a ladder **145** uses one hand to easily lift up a sander **122** to perform sanding operation on an overhead surface **123**. There is no battery installed on the sander **122** but an adapter containing a cable assembly **124** connecting a first adapter member **130** to a second adapter member **126** is installed to the sander **122** through a first interface (not shown) on the first adapter member **130**. The adapter is similar in structure and function to that shown in Figs. la-lb. The user **144** therefore only has to lift up a relatively light weight which is the sander **122** and the first adapter member **130**, as compared to the height weight when the sander **122** is installed with a battery **142**. The battery **142** in this embodiment is connected to the second adapter member **126** via a battery receptacle thereof, and thus is not a burden to the user **144**. A vacuum device **138** is also installed to the second adapter member **126** via a second interface (not shown) thereof to a battery receptacle (not shown 0f the vacuum device **138**. The vacuum device **138** is further connected to the sander **122** with an air hose **136** for directing air flow. The vacuum device **138** is made as or can be put in a mode where when a required current is provided to the battery receptacle of the vacuum device **138**, then the vacuum device **138** can be activated to start its operation. Likewise, when a required current is stopped from being supplied to the vacuum device **138** the vacuum device **138** will stop working.

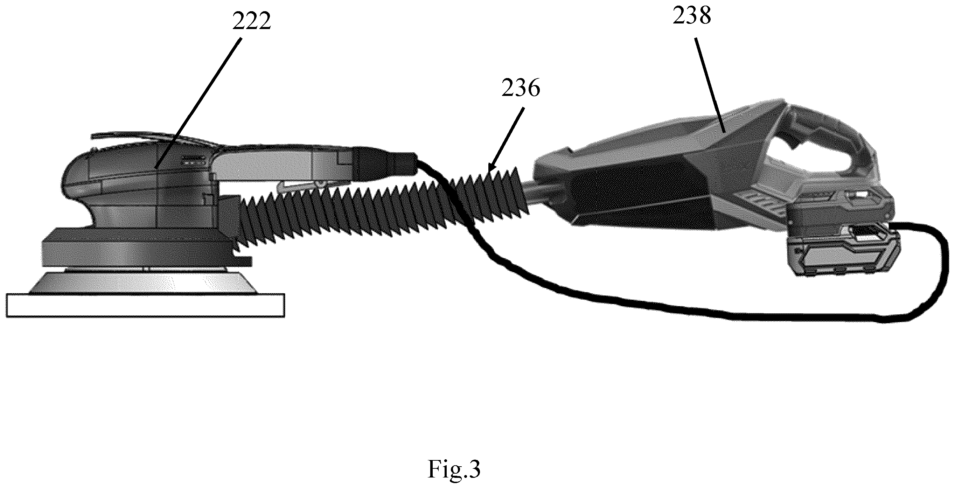

Fig. 3 shows another embodiment of the present invention which is a power tool system. The power tool system is in general similar to the one shown in Fig. 2 and features and components that are in common will not be described again. Rather, only the difference as compared to the power tool system in Fig. 2 will be described. The air house **236** between the sander **222** and the vacuum device **238** is in corrugated type. In comparison, the hose shown in Fig. 2 does not contain a corrugate portion.

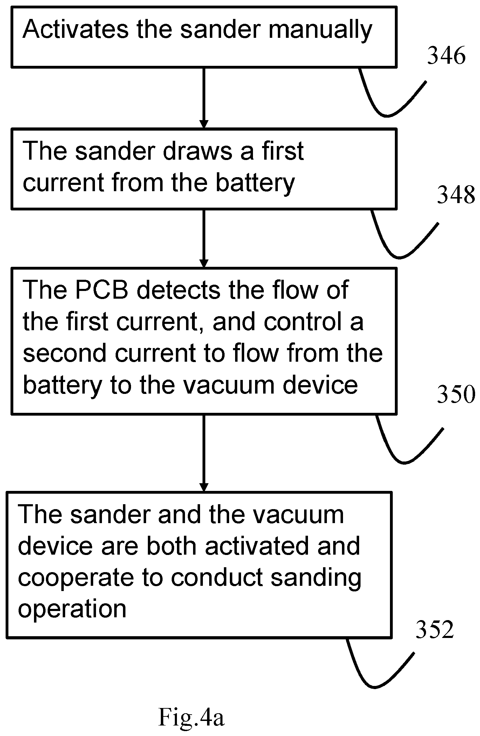

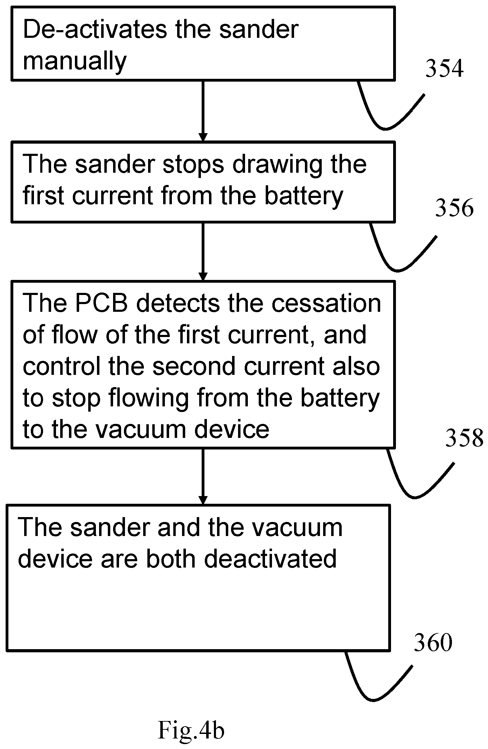

Now turning to the operation of the adapter and power tool system described above, Figs. 4a and 4b show how the sander and the vacuum deice could have automatic, synchronized operations. The methods of operations shown in Figs. 4a-4b are applicable to all adapters and power tool systems shown in Figs. la-3, although in the following section Fig. 2 will be used as a reference to describe the methods. Assume that initially both the sander **122** and the vacuum device **138** are deactivated, then if the user wants to use the sander **122** for sanding operation, he/she in Step **346** manipulates a switch (not shown on the sander **122**) to start operation of the sander **122**. As the sander **122** is connected electrically through the first adapter member **130** and in turn the cable assembly **124** and the second adapter member **126** to the battery **142**, in Step **348** circuits in the first adapter member **130** and the second adapter member **126** allow the sander **122** to draw a first current from the battery **142** which is sufficient to start the operation of the sander **122**. Then, in Step **350** the circuit in the second adapter member **126** detects the flow of the first current as the first current must flow through the second adapter member **126** in order to proceed to the first adapter member **130**. Upon a successful detection of the first current, the circuit in the second adapter member **126** then allows a second current to flow to the vacuum device **138**, thus activating automatically the vacuum device **138** in Step **352**. Then, both the vacuum device **138** and the sander **122** are now activated and any dust generated by the sander **122** will be suctioned by the vacuum device **138** via the cable assembly **124**.

When both the sander **122** and the vacuum device **138** are activated, if the user wants to stop the sanding operation, he/she in Step **346** manipulates the switch again in Step **354** and as a result the sander **122** stops drawing the first current from the battery **142** in Step **356**. As the first current was flowing through the second adapter member **126**, the circuit in the second adapter member **126** detects the cessation of the first current in Step **358**, and in turn controls the second current to also stop flowing from the battery **142** to the vacuum device **138** after five seconds. This causes the vacuum device **138** to eventually stop operation too. Allowing the vacuum device **138** to run additionally for five seconds means that any remaining dust generated by the sander **122** can still be suctioned by the vacuum device **138**, which enhances the dust control. Finally, both the vacuum device **138** and the sander **122** are now deactivated.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above.

It is to be understood that, if any prior art publication is referred to herein, such reference does not constitute an admission that the publication forms a part of the common general knowledge in the art, in Australia or any other country.

For examples, in the embodiments described above the battery is connected to the second adapter member of the adapter which is away from the power tool. However, in other variations of the invention it is also possible for the battery to connect to the first adapter member which is connected to the power tool, and the resultant power tool system may still work under a similar principle.

In addition, the adapter and the power tool system described above are only for two electric devices, e.g. a sander and a vacuum device. However, in other variations of the invention there could be more than two electric devices interconnected by an adapter with more than two adapter members.

## Claims

1. A method of controlling two electric devices for synchronized operations, the method comprising the steps of:
a) detecting, by a first adapter member (30, 130), that a first electric device (22, 122, 222) connected to the first adapter member draws a first current from a battery (142) for operation, the battery being connected to either the first adapter member or a second adapter member (26, 126); the first adapter member connected to the second adapter member by a power cable;
b) following a successful detection in Step a), enabling a second current, by the second adapter member, to flow from the battery to a second electric device (138, 238) connected to the second adapter member, such that the second electric device is automatically synchronized with the operation of the first electric device; **characterised by** further comprising:
c) transmitting data between the first adapter member and the second adapter member through a data cable that connects the first adapter member to the second adapter member; and
d) automatically synchronizing operations of the first electric device and the second electric device through respective circuits in the form of circuit boards carrying controllers and sensors contained in each of the first adapter member and the second adapter member.

2. The method of claim 1, further comprises the following steps:
c) detecting, by the first adapter member (30, 130), that the first electric device (22, 122, 222) stops drawing the first current from the battery (142);
d) following a successful detection in Step c), disabling the second current, by the second adapter member (26, 126), to flow from the battery to the second electric device.

3. An adapter for connecting to two electric devices for synchronized operations of the two electric devices, comprising:
a) a first adapter member (30, 130) adapted to connect to a first electric device (22, 122, 222);
b) a second adapter member (26, 126) adapted to connect to a second electric device (138, 238); and
c) a power cable connecting the first adapter member to the second adapter member; wherein at least one of the first adapter member and the second adapter member is further adapted to connect to a battery (142); and
the first adapter member is adapted to detect that the first electric device connected thereto draws a first current from the battery for operation when the battery is connected to the first adapter member or the second adapter member, and in response to a successful detection of the first current being drawn from the battery, the first adapter member is adapted to control the second adapter member to enable a second current from the battery to flow to the second electric device when the second electric device is connected to the second adapter member, such that the second electric device is automatically synchronized with the operation of the first electric device;
**characterised in that** the adapter further comprises a data cable connecting the the first adapter member to the second adapter member and adapted to transmit data between the first adapter member and the second adapter member; and
each of the first adapter member and the second adapter member contain their respective circuits in the form of circuit boards carrying controllers and sensors adapted for automatically synchronizing operations of the first electric device and the second electric device.

4. The adapter of claim 3, wherein the first adapter member (30, 130) is adapted to detect that the first electric device (22, 122, 222) connected thereto stops drawing the first current from the battery (142) when the battery is connected to the first adapter member or the second adapter member (138, 238), and in response, the first adapter member is adapted to control the second adapter member to disable a second current from the battery to flow to the second electric device when the second electric device is connected to the second adapter member.

5. The adapter of claim 4, wherein the first adapter member (30, 130) further contains a first interface suitable for connecting to a battery receptacle of the first electric device (22, 122, 222); or the second adapter member (26, 126) contains a second interface (28) suitable for connecting to a battery receptacle (20) of the second electric device (138, 238).

6. A power tool system comprising a first electric device (22, 122, 222), a second electric device (138, 238), a battery (142), and an adapter according to any one of claims 3-5.

## Patentansprüche

1. Verfahren zum Steuern von zwei elektrischen Vorrichtungen für synchronisierte Operationen, wobei das Verfahren die Schritte umfasst:
a) Feststellen, durch ein erstes Adapterelement (30, 130), dass eine erste elektrische Vorrichtung (22, 122, 222), die mit dem ersten Adapterelement verbunden ist, zum Betrieb einen ersten Strom aus einer Batterie (142) entnimmt, wobei die Batterie entweder mit dem ersten Adapterelement oder einem zweiten Adapterelement (26, 126) verbunden ist; wobei das erste Adapterelement durch ein Stromkabel mit dem zweiten Adapterelement verbunden ist;
b) nach erfolgreicher Feststellung in Schritt a) Ermöglichen, durch das zweite Adapterelement, dass ein zweiter Strom von der Batterie zu einer zweiten elektrischen Vorrichtung (138, 238) fließt, die mit dem zweiten Adapterelement verbunden ist, sodass die zweite elektrische Vorrichtung automatisch mit dem Betrieb der ersten elektrischen Vorrichtung synchronisiert wird;
**dadurch gekennzeichnet, dass es** ferner umfasst:
c) Übertragen von Daten zwischen dem ersten Adapterelement und dem zweiten Adapterelement durch ein Datenkabel, das das erste Adapterelement mit dem zweiten Adapterelement verbindet; und
d) automatisches Synchronisieren von Operationen der ersten elektrischen Vorrichtung und der zweiten elektrischen Vorrichtung durch jeweilige Schaltungen in Form von Leiterplatten, die Steuereinheiten und Sensoren tragen, die in jedem des ersten Adapterelements und des zweiten Adapterelements enthalten sind.

2. Verfahren nach Anspruch 1, ferner umfassend die folgenden Schritte:
c) Feststellen, durch das erste Adapterelement (30, 130), dass die erste elektrische Vorrichtung (22, 122, 222) aufhört, den ersten Strom aus der Batterie (142) zu entnehmen;
d) nach einer erfolgreichen Feststellung in Schritt c), Deaktivieren, durch das zweite Adapterelement (26, 126), des zweiten Stroms, der von der Batterie zur zweiten elektrischen Vorrichtung fließt.

3. Adapter zum Verbinden mit zwei elektrischen Vorrichtungen für synchronisierte Operationen der zwei elektrischen Vorrichtungen, umfassend:
a) ein erstes Adapterelement (30, 130), das ausgelegt ist, mit einer ersten elektrischen Vorrichtung (22, 122, 222) verbunden zu werden;
b) ein zweites Adapterelement (26, 126), das ausgelegt ist, mit einer zweiten elektrischen Vorrichtung (138, 238) verbunden zu werden; und
c) ein Stromkabel, das das erste Adapterelement mit dem zweiten Adapterelement verbindet;
wobei mindestens eines des ersten Adapterelements und des zweiten Adapterelements ferner ausgelegt ist, mit einer Batterie (142) verbunden zu werden; und
das erste Adapterelement ausgelegt ist festzustellen, dass die damit verbundene erste elektrische Vorrichtung zum Betrieb einen ersten Strom aus der Batterie entnimmt, wenn die Batterie mit dem ersten Adapterelement oder dem zweiten Adapterelement verbunden ist, und als Reaktion auf eine erfolgreiche Feststellung, dass der erste Strom aus der Batterie entnommen wird, das erste Adapterelement ausgelegt ist, das zweite Adapterelement zu steuern, um zu ermöglichen, dass ein zweiter Strom von der Batterie zur zweiten elektrischen Vorrichtung fließt, wenn die zweite elektrische Vorrichtung mit dem zweiten Adapterelement verbunden ist, sodass die zweite elektrische Vorrichtung automatisch mit dem Betrieb der ersten elektrischen Vorrichtung synchronisiert wird;
**dadurch gekennzeichnet, dass**
der Adapter ferner ein Datenkabel umfasst, das das das erste Adapterelement mit dem zweiten Adapterelement verbindet und ausgelegt ist, Daten zwischen dem ersten Adapterelement und dem zweiten Adapterelement zu übertragen; und
jedes des ersten Adapterelements und des zweiten Adapterelement ihre jeweiligen Schaltungen in Form von Leiterplatten enthalten, die Steuereinheiten und Sensoren tragen, die zum automatischen Synchronisieren von Operationen der ersten elektrischen Vorrichtung und der zweiten elektrischen Vorrichtung ausgelegt sind.

4. Adapter nach Anspruch 3, wobei das erste Adapterelement (30, 130) ausgelegt ist festzustellen, dass die damit verbundene erste elektrische Vorrichtung (22, 122, 222) aufhört, den ersten Strom aus der Batterie (142) zu entnehmen, wenn die Batterie mit dem ersten Adapterelement oder dem zweiten Adapterelement (138, 238) verbunden ist, und als Reaktion darauf das erste Adapterelement ausgelegt ist, das zweite Adapterelement zu steuern, um einen zweiten Strom zu deaktivieren, der von der Batterie zur zweiten elektrischen Vorrichtung fließt, wenn die zweite elektrische Vorrichtung mit dem zweiten Adapterelement verbunden ist.

5. Adapter nach Anspruch 4, wobei das erste Adapterelement (30, 130) ferner eine erste Schnittstelle enthält, die zum Verbinden mit einer Batterieaufnahme der ersten elektrischen Vorrichtung (22, 122, 222) geeignet ist; oder das zweite Adapterelement (26, 126) eine zweite Schnittstelle (28) enthält, die zum Verbinden mit einer Batterieaufnahme (20) der zweiten elektrischen Vorrichtung (138, 238) geeignet ist.

6. Elektrowerkzeugsystem, das eine erste elektrische Vorrichtung (22, 122, 222), eine zweite elektrische Vorrichtung (138, 238), eine Batterie (142) und einen Adapter nach einem der Ansprüche 3 bis 5 umfasst.

## Revendications

1. Procédé de commande de deux dispositifs électriques pour des fonctionnements synchronisés, le procédé comprenant les étapes consistant à :
a) détecter, par un premier élément adaptateur (30, 130), qu'un premier dispositif électrique (22, 122, 222) connecté au premier élément adaptateur débite un premier courant d'une batterie (142) pour le fonctionnement, la batterie étant connectée soit au premier élément adaptateur soit à un deuxième élément adaptateur (26, 126) ; le premier élément adaptateur connecté au deuxième élément adaptateur par un câble de puissance ;
b) à la suite d'une détection réussie à l'étape a), permettre à un deuxième courant, par le deuxième élément adaptateur, de circuler de la batterie à un deuxième dispositif électrique (138, 238) connecté au deuxième élément adaptateur, de sorte que le deuxième dispositif électrique est automatiquement synchronisé avec le fonctionnement du premier dispositif électrique ;
**caractérisé en ce qu'**il comprend en outre :
c) la transmission de données entre le premier élément adaptateur et le deuxième élément adaptateur par l'intermédiaire d'un câble de données qui connecte le premier élément adaptateur au deuxième élément adaptateur ; et
d) la synchronisation automatique des fonctionnements du premier dispositif électrique et du deuxième dispositif électrique par l'intermédiaire de circuits respectifs sous la forme de cartes de circuit comportant des contrôleurs et des capteurs contenus dans chacun du premier élément adaptateur et du deuxième élément adaptateur.

2. Procédé selon la revendication 1, comprend en outre les étapes suivantes :
c) la détection, par le premier élément adaptateur (30, 130), que le premier dispositif électrique (22, 122, 222) arrête de débiter le premier courant de la batterie (142) ;
d) à la suite d'une détection réussie à l'étape c), la désactivation, par le deuxième élément adaptateur (26, 126), d'une circulation du deuxième courant depuis la batterie vers le deuxième dispositif électrique.

3. Adaptateur pour connexion à deux dispositifs électriques pour des fonctionnements synchronisés des deux dispositifs électriques, comprenant :
a) un premier élément adaptateur (30, 130) conçu pour se connecter à un premier dispositif électrique (22, 122, 222) ;
b) un deuxième élément adaptateur (26, 126) conçu pour se connecter à un deuxième dispositif électrique (138, 238) ; et
c) un câble de puissance connectant le premier élément adaptateur au deuxième élément adaptateur ;
dans lequel au moins un parmi le premier élément adaptateur et le deuxième élément adaptateur est conçu en outre pour se connecter à une batterie (142) ; et
le premier élément adaptateur est conçu pour détecter que le premier dispositif électrique connecté à celui-ci débite un premier courant de la batterie pour le fonctionnement lorsque la batterie est connectée au premier élément adaptateur ou au deuxième élément adaptateur, et en réponse à une détection réussie du premier courant étant débité de la batterie, le premier élément adaptateur est conçu pour commander le deuxième élément adaptateur pour permettre à un deuxième courant provenant de la batterie de circuler vers le deuxième dispositif électrique lorsque le deuxième dispositif électrique est connecté au deuxième élément adaptateur, de sorte que le deuxième dispositif électrique est automatiquement synchronisé avec le fonctionnement du premier dispositif électrique ;
**caractérisé en ce que**
l'adaptateur comprend en outre un câble de données connectant le le premier élément adaptateur au deuxième élément adaptateur et conçu pour transmettre des données entre le premier élément adaptateur et le deuxième élément adaptateur ; et
le premier élément adaptateur et le deuxième élément adaptateur contiennent chacun leurs circuits respectifs sous la forme de cartes de circuit comportant des contrôleurs et capteurs conçus pour une synchronisation automatique des fonctionnements du premier dispositif électrique et du deuxième dispositif électrique.

4. Adaptateur selon la revendication 3, dans lequel le premier élément adaptateur (30, 130) est conçu pour détecter que le premier dispositif électrique (22, 122, 222) connecté à celui-ci arrête de débiter le premier courant de la batterie (142) lorsque la batterie est connectée au premier élément adaptateur ou au deuxième élément adaptateur (138, 238), et en réponse, le premier élément adaptateur est conçu pour commander le deuxième élément adaptateur pour désactiver la circulation d'un deuxième courant de la batterie vers le deuxième dispositif électrique lorsque le deuxième dispositif électrique est connecté au deuxième élément adaptateur.

5. Adaptateur selon la revendication 4, dans lequel le premier élément adaptateur (30, 130) contient en outre une première interface appropriée pour connexion à un réceptacle de batterie du premier dispositif électrique (22, 122, 222) ; ou le deuxième élément adaptateur (26, 126) contient une deuxième interface (28) appropriée pour connexion à un réceptacle de batterie (20) du deuxième dispositif électrique (138, 238).

6. Système d'outil motorisé comprenant un premier dispositif électrique (22, 122, 222), un deuxième dispositif électrique (138, 238), une batterie (142), et un adaptateur selon l'une quelconque des revendications 3 à 5.
